# EUROPEAN PATENT APPLICATION

(11) **EP 4 799 810 A1**
(43) Date of publication of application: **02.09.2026**
(21) Application number: 24881739.7
(22) Date of filing: 25.10.2024
(51) Int. Cl.: B32B 27/32, B32B 27/02, B29C 69/02, B32B 27/12, B32B 27/40, B32B 27/36, B32B 27/08, B32B 27/30, B32B 33/00, B32B 9/02, B32B 9/04

(54) **MULTI-LAYER MATERIAL AND MANUFACTURING METHOD THEREFOR**

(30) Priority: 26.10.2023 CN 202311406760
(71) Applicant: Yanfeng International Automotive Technology Co., Ltd., Shanghai 201306 (CN)
(72) Inventor: SHI, Jie, Shanghai 201315 (CN); WANG, Liyong, Shanghai 201315 (CN); SUN, Jie, Shanghai 201315 (CN)
(74) Representative: Trinks, Ole
(86) International application number: PCT/CN2024/127326
(87) International publication number: WO 2025/087379

(57) **Abstract**

The present invention relates to a multilayer material for vehicle trim components and a method of manufacturing the same. The multilayer material of the present invention can be used in vehicle trim components, such as instrument panels, door panel inserts, seat back panels, steering wheel covers or a center console armrest covers, etc. While offering the advantage of lightweight construction, it provides a soft touch feel, delivering an enhanced tactile experience and improved user experience. Furthermore, its manufacturing process is simple, making it suitable for industrial production.

## Description

### Technical Field

The present invention relates to a multilayer material for vehicle trim components. More specifically, the present invention relates to a multilayer material comprising a lightweight support structure, a skin layer and a soft layer between the lightweight support structure and the skin layer, a method of manufacturing the same and its use in vehicle trim components.

### Background

With the rapid development of the transportation sector, vehicles such as automobiles have become essential modes of transportation, and their interiors have emerged as one of the most critical selling points. These interiors may include the instrument panel, door trim panels, seat back panels, steering wheel covers and armrest covers on the passenger side. As consumer brand awareness grows and the functionality of interiors is comprehensively considered, the focus has shifted toward a human-centered user experience. While meeting the functional requirements of interior shapes, efforts are made to satisfy both consumers' functional needs and psychological expectations, with energy conservation and environmental protection gradually becoming central themes in technological development.

Furthermore, material lightweighting has become a trend in the automotive industry. The use of more aluminum alloys, magnesium alloys and engineering plastics-without compromising body strength-helps reduce the vehicle's curb weight. At the same time, the lightweighting of trim components is a crucial aspect, leading to improved fuel economy.

To enhance tactile feedback and provide users with a better experience, automotive interior components-particularly instrument panels, door trim panels, seat back panels, steering wheel covers and armrest covers-typically employ a multilayer structure consisting of an injection-molded base frame, a soft intermediate layer and an outer covering.

Currently, injection-molded skins are typically bonded to polypropylene (PP) or ABS engineering plastic (PC/ABS) injection-molded frames using polyurethane (PU) foaming or wrapping processes, involving at least three steps: frame injection molding, skin injection molding and PU foaming or wrapping. The involved steps are relatively cumbersome, and the production process requires a large amount of adhesive to bond the skin to the skeleton. Furthermore, ABS engineering plastic has a relatively high mass, a low heat deflection temperature, poor weather resistance and is prone to degradation under UV light. Therefore, it does not meet the criteria for energy conservation and environmental protection.

CN106393890A discloses an ultra-soft, eco-friendly thermoplastic polyolefin (TPO) automotive interior material that enhances the soft tactile feel of the interior material, increases product comfort and features a surface coating of soft water-based polyurethane paint combined with soft sponge.

### Summary of the Invention

To address the above issues, a first aspect of the present invention provides a multilayer material comprising:
a lightweight support structure; a skin layer; and a soft layer between the lightweight support structure and the skin layer, wherein: i) the skin layer is formed by injection molding, and a first film is included between the soft layer and the skin layer; or ii) the skin layer is formed by foam injection molding.

A second embodiment of the present invention provides a method of manufacturing a multilayer material, comprising:
providing lightweight support structure material, skin layer material, soft layer material and first film material;
softening the lightweight support structure material;
laminating the first film material with the soft layer material to form a soft layer with a film;
mold-forming the softened lightweight support structure material with the soft layer having the film to obtain a lightweight support structure with a soft layer;
injection molding the skin layer material onto the surface of the film material of the lightweight support structure with the soft layer to obtain the multilayer material.

A further embodiment of the second aspect of the present invention provides a method of manufacturing a multilayer material, comprising:
providing lightweight support structure materials and skin layer materials, wherein the skin layer materials contain a foaming agent;
softening the lightweight support structure material;
mold-pressing the softened lightweight support structure material to form a lightweight support structure;
injecting the skin layer material onto the surface of the lightweight support structure and foaming it to obtain the multilayer material.

A third aspect of the present invention further provides a vehicle trim component comprising the multilayer material of the present invention and/or a multilayer material prepared by the method of the present invention.

A fourth aspect further provides a vehicle comprising the vehicle trim component of the present invention.

### Description of the Drawings

For a more complete understanding of the present invention, reference is now made to the examples illustrated in more detail in the accompanying drawings and described below, wherein:

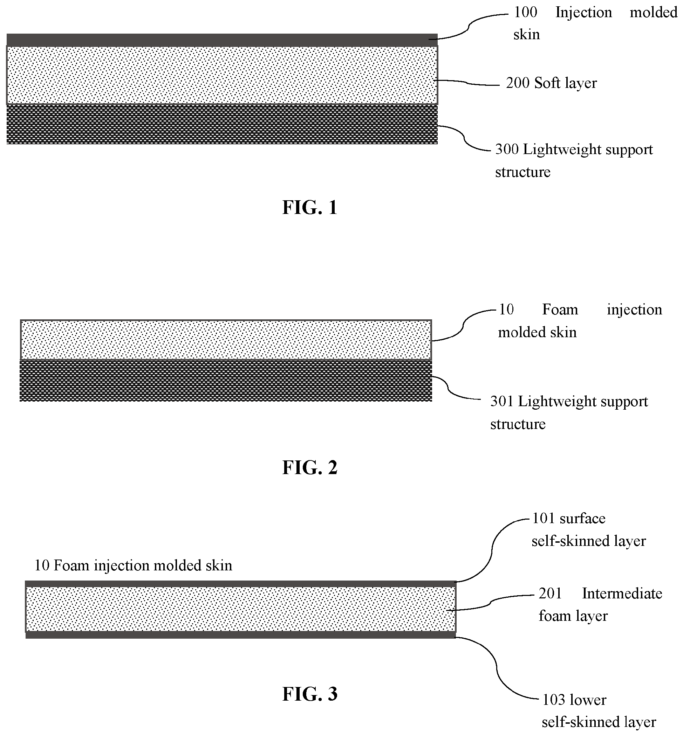

Figure 1 illustrates an embodiment of the multilayer material of the present invention, wherein 100 is an injection-molded skin formed by injection molding of a skin layer material, 200 is a soft layer formed from a soft layer material and 300 is a lightweight support structure formed from a lightweight support structure material.
Figure 2 illustrates another embodiment of the multilayer material of the present invention, wherein 10 is a foam injection-molded skin formed as a three-layer structure by foam injection molding of a skin layer material containing a foaming agent, and 301 is a lightweight support structure formed from a lightweight support structure material.
Figure 3 illustrates the foam injection-molded skin 10 of the embodiment shown in Figure 2, wherein 101 is the surface self-skinned layer formed by foam injection molding, forms the injection-molded skin layer; 201 is the intermediate foam layer formed by foam injection molding, forms the soft layer; and 103 is the lower self-skinned layer formed by foam injection molding, which is bonded to the lightweight support structure.

### Specific Embodiments

### General Definitions and Terminology

Unless otherwise noted, all publications, patent applications, patents and other references mentioned herein are incorporated herein in their entirety by reference.

Unless otherwise defined, all technical and scientific terms used herein have the same meanings as those commonly understood by those skilled in the art to which the present invention pertains. In the event of any conflict, the definitions provided herein shall prevail.

When quantities, concentrations or other values or parameters are given as a range, a preferred range, or preferred upper and lower limits, or as specific values, they should be understood to encompass all ranges formed by any pair of values from any upper limit or preferred value and any lower limit or preferred value, regardless of whether such ranges are disclosed individually. Unless otherwise specified, when numerical ranges are cited herein, the ranges include their endpoints as well as all integers and fractions within the range. The scope of the present invention is not limited to the specific values cited when defining the ranges. For example, "200 to 250" encompasses 200, 201, 202, 203, 204, 205, 206, 207, 208, 209, 210, 211, 212, 213, 214, 215, 216, 217, 218, 219,220, 221, 222, 223, 224, 225, 226, 227, 228, 229, 230, 231, 232, 233, 234, 235, 236, 237, 238, 239, 240, 241, 242, 243, 244,245, 246, 247, 248, 249 and 250, as well as any subrange consisting of any two of these values, such as 200 to 240, 220 to 235, 225 to 235 and 228 to 232;or, for example, "2 to 7" covers 2, 2.5, 3, 3.5, 4, 4.5, 5, 5.5, 6, 6.5 and 7.

As used herein, the terms "about" and "approximately," when used in conjunction with a numerical variable, generally refer to the value of that variable and all values of that variable within the margin of experimental error (e.g., within the 95% confidence interval for a mean), or within ±10% of a specified value, or within a broader range.

As used herein, the terms "include," "comprise," "have," "contain," or "involve" and other variants thereof are inclusive or open-ended and do not exclude other elements or method steps not listed. Those skilled in the art will understand that the aforementioned terms, such as "include," encompass the meaning of "consist of. "The expression "consisting of" excludes any unspecified elements, steps or components. The expression "essentially consisting of" means a scope limited to the specified elements, steps or components, plus any optional elements, steps or components that do not substantially affect the essential and novel features of the subject matter claimed. It should be understood that the expression "comprising" encompasses the expressions "essentially consisting of" and "consisting of."

As used herein, the term "and/or" encompasses the combinations of "and" and "or." For example, "A and/or B" encompasses the combinations A, B and A+B.

As used herein, the terms "their combination" and "their mixture" denote a multi-component combination or mixture of the respective elements, such as combinations or mixtures of two, three, four and up to the maximum possible number of components.

Where the number of components or parts of the present invention is not specified, it is understood that there is no limitation on the number of occurrences (or presence) of such components or parts. Therefore, it should be interpreted as including one or more, and the singular form of a component or part also includes the plural, unless the context clearly indicates the singular.

As used herein, the terms "optional" or "optionally" mean that the event or circumstance described may or may not occur, and the description includes both the occurrence and non-occurrence of said event or circumstance.

When describing methods, components, or steps, the use of letters or numbers is for identification purposes only and does not limit such methods, components, or steps to the order or sequence indicated. A person skilled in the art may make reasonable adjustments. For example, "first method" and "second method," "first film" and "second film," are used solely for identification purposes and do not imply any order or sequence between them; objects referred to by different identifiers may be the same or different.

As used in this document, the term "vehicle" is also known as "means of transportation" and refers to machinery or equipment used to transport goods, personnel and the like. This includes, but is not limited to, automobiles, airplanes, ships, bicycles, trams, trains, subways and light rail.

As used herein, the term "lightweighting" refers to reducing the mass of a product as much as possible while ensuring its properties (e.g., stiffness) and performance.

As used herein, the term "lightweight support structure" refers to a structure obtained by subjecting lightweight support structure materials to appropriate processing. Such processes include, but are not limited to, heat treatment for softening and compression molding.

As used herein, the term "soft layer" refers to a structure that provides a soft texture within a multilayer material. As used herein, the hardness of a material or product is determined and characterized using the Shore method in accordance with the standardized test procedures of GB/T 531.1-2008/ISO 7619-1:2004 or ASTM D2240. In the Shore hardness test, a spring-loaded indenter made of hardened steel is used to create an indentation in the material or specimen, and the depth of the indentation is measured. Indentation depth is a method of measuring Shore hardness, which is determined on a scale ranging from 0 Shore (2.5 mm indentation depth) to 100 Shore (0 mm indentation depth).Depending on the indenter type and spring characteristics, various Shore hardness scales have been established, including Shore A, B, C, D, 0, 00, 000 and D0 scales.

As used in this paper, the term "modulus of bending" refers to the ratio of bending stress to the resulting bending strain, characterizing a material's ability to resist bending deformation within its elastic limit.

As used in this paper, the term "skin layer" refers to the surface of a multilayer material that comes into contact with the user.

As used herein, the term "surface self-skinning" refers to a solidified layer without voids formed by the rapid cooling of the melt of a thermoplastic injection-molded skin layer material containing a blowing agent during the injection molding process, where the melt comes into contact with the mold cavity. When this solidified layer serves as the outer surface of a multilayer material or product, it is referred to as surface self-skinning.

As used herein, the term "compatible" or "compatibility" refers to the ability of the components of a blend to accept one another and form a macroscopically homogeneous material. For example, TPU film is compatible with TPEE material.

As used herein, the term "outer side" refers to the side of the multilayer material of the present invention that is closer to the user. For example, in a multilayer material, from the inside out, the layers may be a lightweight support structure layer, a soft layer and a skin layer, respectively. The skin layer is located on the outer side of the soft layer, and the soft layer is located on the outer side of the lightweight support structure layer. Conversely, for example, the soft layer is located on the inner side of the skin layer, and the lightweight support structure layer is located on the inner side of the soft layer.

The term "injection molding" refers to a method of manufacturing shaped products. It is commonly used for rubber and plastic injection molding. Injection molding can be further classified into injection molding and compression molding. Typically, an injection molding machine is used to transform thermoplastic or thermosetting materials into plastic products of various shapes using plastic molds.

The term "polyethylene terephthalate (PET) nonwoven fabric" or "PET nonwoven" refers to nonwoven fabric produced from polyethylene terephthalate (PET) fibers.

The term "3D mesh fabric," also known as "3D mesh," "sandwich mesh" or "3D spacer fabric," is a woven fabric material that offers excellent elasticity and support.

The term "adhesive film," also known as "adhesive tape," refers to a type of film- or sheet-like adhesive that is sandwiched between the materials to be bonded and can bond upon application of heat and pressure, including but not limited to polyethylene adhesive film, polyamide adhesive film and polyester adhesive film.

The term "TPEE" refers to thermoplastic polyester elastomer (TPEE), also known as polyester rubber, which is a class of linear block copolymers containing PBT (polybutylene terephthalate) polyester hard segments and aliphatic polyester or polyether soft segments. The polyester segments in these polymers typically have a regular structure and can phase-separate into crystalline microdomains, maximizing the intermolecular attraction between the hard-phase chain segments. These crystalline microdomains cause physical cross-linking of the amorphous elastic segments. When the temperature approaches the melting point of the microcrystals, this type of material still retains its integrity and begins to flow only under the action of higher temperatures and shear stress during thermoplastic processing.

The terms "foaming material" or "foaming agent" refer to substances that can gasify within a material to produce bubbles, thereby making it porous, such as in the manufacture of foam plastics, foam rubber and foam resins. Foaming materials can be divided into three major categories: chemical foaming materials, physical foaming materials and surfactants. For example, commonly used organic blowing agents include polyethylene glycol, polyvinyl alcohol, polyethylene ether and polyurethane, while commonly used inorganic blowing agents include carbonates and ammonium chloride.

The term "TPU" refers to thermoplastic polyurethane elastomer, also known as thermoplastic polyurethane rubber, which is a (AB) ₙblock copolymer, where A is a high-molecular-weight (1,000 to 6,000) polyester or polyether, and B is a diol containing 2 to 12 linear carbon atoms; the chemical structure between the AB segments is diisocyanate. Thermoplastic polyurethane rubber relies on intermolecular hydrogen bonding or mild cross-linking between macromolecular chains; as the temperature rises or falls, these two cross-linking structures are reversible. The plasticity and high polarity of thermoplastic polyurethane elastomers allow for the use of various processing methods commonly employed in the plastics industry, including mixing, internal mixing, calendering, extrusion, molding (injection, compression, transfer, centrifugal (powder) and blow molding), as well as solution processing. A key advantage of thermoplastic polyurethane elastomers is that they can be processed into elastomer products without the need for curing (cross-linking), allowing scrap generated during the manufacturing process to be reused.

The term "PE" refers to polyethylene, a thermoplastic resin produced by the polymerization of ethylene. Polyethylene is primarily divided into three major categories: linear low-density polyethylene (LLDPE), low-density polyethylene (LDPE) and high-density polyethylene (HDPE). Linear low-density polyethylene is produced by copolymerizing short-chain side-chain-containing monomers onto the main chain of polyethylene. Low-density polyethylene is typically produced through radical polymerization under high temperature and pressure. Due to chain transfer reactions during the process, numerous side chains form on the molecular chains. These side chains disrupt the orderly arrangement of the molecular chains, resulting in a lower density. High-density polyethylene is typically manufactured using Ziegler-Natta catalyst polymerization. It is characterized by the absence of side chains on the molecular chains, leading to a regular molecular chain arrangement and a higher density.

The term "TPV" refers to thermoplastic vulcanizate, which consists of two components: a plastic phase forms the continuous phase and a rubber phase forms the dispersed phase. Thermoplastic vulcanizate is a high-performance elastomer with a unique structural composition that combines the excellent resilience of traditional elastomers with the recyclability of thermoplastics. TPV is formed when rubber and resin are melt-blended, and the vulcanized rubber phase is fragmented into island-like structures dispersed within the continuous phase (resin).

The term "PU" refers to polyurethane, also known as polyurethane, which is a type of polymer. Polyurethane is divided into two major categories: polyester-based and polyether-based. They can be processed into polyurethane plastics (primarily foam plastics), polyurethane fibers, polyurethane rubber and elastomers.

In the present invention, the term "natural fiber board" includes hemp fiber board, jute fiber board, and boards formed from other natural fibers such as flax, wood or sisal.

### Multilayer Material for Vehicle Trim Components

In one aspect, the present invention provides a multilayer material for vehicle trim components, comprising:
a lightweight support structure; a skin layer; and a soft layer between the lightweight support structure and the skin layer, wherein the skin layer is formed by injection molding, and the soft layer includes a first film between the soft layer and the skin layer.

On the other hand, the present invention also provides a multilayer material for vehicle trim components, comprising:
a lightweight support structure; a skin layer; and a soft layer between the lightweight support structure and the skin layer, wherein the skin layer is formed by foam injection molding.

The multilayer material for vehicle trim components provided by the present invention utilizes a lightweight support structure and a reasonable combination of a soft layer and a skin layer. While meeting lightweight requirements, it also provides a soft tactile feel, enhancing the user experience, and is applicable to a wide range of scenarios. For example, it can be used as vehicle trim components for instrument panels, door panel inserts, seat back panels, steering wheel covers and armrest covers on the passenger side dashboard.

Accordingly, the present invention also provides a vehicle trim component comprising the multilayer material of the present invention, as well as a vehicle comprising the vehicle trim component of the present invention.

### Lightweight support structure

As "energy conservation and environmental protection" have become increasingly prominent topics of concern, lightweighting has also been widely adopted in the general vehicle sector, offering excellent fuel economy while improving handling performance. A vehicle's fuel consumption primarily depends on the engine displacement and the vehicle's total mass. By reducing the vehicle's own weight while maintaining or even optimizing its overall quality, performance and cost, it is possible to increase power output, reduce noise, improve handling and reliability, increase vehicle speed, reduce fuel consumption, lower exhaust emissions and enhance safety. Due to environmental and energy-saving requirements, vehicle lightweighting has become a prevailing trend.

In one embodiment, the lightweight support structure of the present invention comprises hemp fiberboard, foamed hemp fiberboard, foamed fiberglass board, polypropylene, polyimide, polycarbonate or a combination thereof. In one embodiment, the thickness of the lightweight support structure is approximately 1.5 mm to 3 mm. In one embodiment, the flexural modulus of the lightweight support structure is approximately 1,800 MPa or higher. In one embodiment, the density of the lightweight support structure is approximately 0.85 g/cm³ or less. In a preferred embodiment, the lightweight support structure of the present invention comprises a hemp fiber board. In one embodiment, a second film is included between the lightweight support structure and the soft layer. In one embodiment, the second film included between the lightweight support structure and the soft layer comprises polyethylene. In the present invention, the film present between the lightweight support structure and the soft layer is referred to as the "second film."

### Hemp fiberboard

Hemp fiberboard is a new type of high-strength, eco-friendly material made primarily from natural hemp fibers. It is produced through high-temperature, high-pressure processing and consists of a combination of structural fibers and thermoplastic resins. The structural fibers may include natural fibers (such as hemp, wood, flax, jute and sisal) or synthetic fibers (such as glass fiber, carbon fiber and polymer fibers). For example, hemp fiberboard can be a composite material consisting of natural hemp fibers and approximately 40% to 50% polypropylene (PP). During the heating process, the polypropylene melts and bonds the hemp fibers together, forming low-density, high-strength panels or three-dimensional structural materials.

Hemp fiber is a natural plant fiber that contains no harmful substances and poses no risk to human health. Furthermore, the production process of hemp fiberboard does not require the use of any harmful chemicals and does not generate pollution. Compared to chemical materials, its source is more environmentally friendly, and it is a renewable and biodegradable eco-friendly material. Hemp fiberboard also possesses excellent sound insulation, thermal insulation and fire-resistant properties.

In this invention, hemp fiber board is utilized as a skeletal material due to its lightweight characteristics, further enhancing its environmental benefits while retaining all its superior performance properties. Foamed hemp fiber board may also be used as a lightweight support structure material in this invention.

### Fiberglass Board

Fiberglass board is a composite material synthesized from glass fiber and high-heat-resistant materials. It possesses high mechanical strength, good heat resistance and moisture resistance as well as excellent processability. In this invention, foamed fiberglass board can be used as a lightweight support structure material.

### Polypropylene (PP)

Polypropylene is a thermoplastic synthetic resin with excellent properties. It is a colorless, translucent, lightweight, general-purpose thermoplastic that offers chemical resistance, heat resistance, electrical insulation, high mechanical strength and good wear resistance during processing.

However, polypropylene has poor impact resistance at low temperatures, inadequate weather resistance and poor surface aesthetics. Additionally, its functional properties-including electrical, magnetic, optical, thermal and combustion characteristics-fall short of practical requirements. Therefore, polypropylene is modified to address these issues. Through copolymerization modification, cross-linking modification, graft modification and the addition of nucleating agents, the macromolecular components and macromolecular structure or crystalline configuration of polypropylene are altered to improve its mechanical properties, heat resistance and aging resistance, thereby enhancing its overall performance and expanding its application fields.

In this invention, polypropylene and/or modified polypropylene containing a foaming agent is processed via a foam injection molding process to produce the lightweight support structure of the present invention.

### Polyimide (PI)

Polyimide refers to a class of polymers containing imide rings (-CO-NR-CO-) in their main chains. Based on the chemical structure of the repeating units, polyimides can be classified into three types: aliphatic, semi-aromatic and aromatic polyimides. Based on interchain interactions, they can be classified into cross-linked and non-cross-linked types. Polyimide is non-toxic, resistant to extremely low temperatures and possesses excellent mechanical properties, a low coefficient of thermal expansion and high radiation resistance. It exhibits a variety of properties, including both thermoplastic and thermosetting characteristics.

### Polycarbonate (PC)

Polycarbonate, also known as PC plastic, is a polymer containing carbonate ester groups in its molecular chain. Based on the structure of the ester groups, it can be classified into various types, including aliphatic, aromatic and aliphatic-aromatic. Polycarbonate features high strength and elastic modulus, high impact strength, excellent fatigue resistance, a wide operating temperature range and ease of processing and molding.

In one embodiment, the surface of the lightweight support structure may further be laminated with a polyethylene (PE) film. In one embodiment, the polyethylene film is positioned between the lightweight support structure and the soft layer. In one embodiment, the lightweight support structure with the PE film is heated to melt the PE film and bond it to the lightweight support structure.

### Soft Layer

As described herein, the soft layer is the material layer in the multilayer material of the present invention that primarily provides a soft tactile sensation. In one embodiment, the soft layer has a thickness of approximately 0.5 mm to 3 mm. In one embodiment, the Shore C hardness of the soft layer is approximately 30 to 60 degrees.

In one embodiment, a first film is included between the soft layer and the skin layer, wherein the soft layer and the first film exist in a composite form. In a preferred embodiment, the first film is compatible with the skin injection molding material. In one embodiment, the first film material comprises TPU, TPEE or a combination thereof. In a preferred embodiment, the first film material comprises TPU. In another preferred embodiment, the first film material comprises TPEE. In the present invention, the film located between the soft layer and the outer layer is referred to as the "first film." The use of the film prevents the injection-molded material from penetrating the soft layer, thereby preventing the soft layer from failing to provide the desired soft tactile feel due to changes in its properties caused by the penetration of the injection-molded material. In another embodiment, the soft layer may not include the first film.

In one embodiment, the soft layer comprises polyethylene terephthalate (PET) fiber nonwoven fabric, three-dimensional mesh fabric, sponge, thermoplastic polyester elastomer, an intermediate foam layer formed by foaming a thermoplastic polyester elastomer or a combination thereof. In one embodiment, the soft layer comprises polyethylene terephthalate (PET) fiber nonwoven fabric. In one embodiment, the soft layer comprises a three-dimensional mesh fabric. In one embodiment, the soft layer comprises foam. In one embodiment, the soft layer comprises a thermoplastic polyester elastomer. In one embodiment, the soft layer comprises an intermediate foam layer formed by foaming a thermoplastic polyester elastomer.

### Polyethylene terephthalate (PET) fiber nonwoven fabric

Nonwoven fabric, also known as nonwoven, is composed of oriented or randomly arranged fibers.

Polyester is an important type of synthetic fiber, produced by spinning and post-processing polyethylene terephthalate (PET). The polyester molecule consists of short aliphatic hydrocarbon chains, ester groups, benzene rings and terminal hydroxyl groups; due to the aliphatic hydrocarbon chains, it possesses flexibility. Polyester also features high strength, good elasticity, heat resistance, thermoplasticity, abrasion resistance, lightfastness and corrosion resistance. It has poor moisture absorption, so it dries very quickly after washing and does not lose its shape.

In one embodiment, the soft layer of the present invention comprises a nonwoven fabric made of polyethylene terephthalate (PET) fibers. By using a PET fiber nonwoven fabric as the soft layer, the present invention provides a soft tactile feel while retaining all of its advantageous properties.

### 3D Mesh Fabric

Three-dimensional mesh fabric is a woven material with excellent elasticity and support. It features superior resilience, moisture permeability, good mechanical properties and chemical stability. It provides cushioning and protective effects and can be used in 3D mattresses, 3D pillows, 3D car seat cushions and other applications, aligning with international development concepts of resource conservation and environmental protection.

In one embodiment, the soft layer of the present invention comprises a three-dimensional mesh fabric. The present invention may employ a three-dimensional mesh fabric as the soft layer to provide a soft touch while retaining all its advantageous properties.

### Sponge

As used herein, "sponge" refers to artificial sponge, also known as synthetic sponge or chemical sponge, a material commonly understood by those skilled in the art. It is typically synthesized through artificial foaming using raw materials such as polyurethane, and is a type of polyurethane foam.

The present invention may employ sponge as the soft layer to provide a soft tactile sensation. In one embodiment, the soft layer of the present invention comprises sponge.

### Thermoplastic Polyester Elastomer (TPEE)

Thermoplastic Polyester Elastomer (TPEE), also known as polyester rubber, is a class of linear block copolymers containing PBT (polybutylene terephthalate) polyester hard segments and aliphatic polyester or polyether soft segments. TPEE combines the excellent elasticity of rubber with the processability of thermoplastics; its hardness is adjustable, and it offers resistance to flexural fatigue, impact resistance, chemical resistance, weather resistance and good adhesion.

The present invention may use treated TPEE as the soft layer to provide a soft tactile feel while retaining all of its advantageous properties. In one embodiment, the treated TPEE comprises TPEE containing a foaming agent that has been processed via a foaming injection molding process. In one embodiment, the soft layer of the present invention comprises an intermediate foamed layer formed from the foamed TPEE.

### Outer Layer

As used herein, the skin layer refers to the outermost structure of the multilayer material provided by the present invention, which may come into contact with the user. In one embodiment, the skin layer of the present invention may itself possess a certain degree of softness, further enhancing the soft tactile sensation provided by the soft layer. In one embodiment, the skin layer has a thickness of approximately 0.4 mm to 1.2 mm. In one embodiment, the skin layer has a thickness of approximately 1 mm. In another embodiment, the skin layer has a thickness of approximately 0.5 mm. In one embodiment, the skin layer has a Shore A hardness of approximately 40 to 80 degrees. In one embodiment, the density of the skin layer is approximately 1 g/cm³ to 1.3 g/cm³.

In one embodiment, the skin layer comprises a thermoplastic polyester elastomer or a surface self-skinned layer formed by foaming thereof, a thermoplastic vulcanized rubber, a polyurethane or a combination thereof. In a preferred embodiment, the skin layer comprises a thermoplastic polyester elastomer or a surface self-skinned layer formed by foaming the same. In a more preferred embodiment, the skin layer comprises a thermoplastic polyester elastomer. In a further preferred embodiment, the skin layer comprises a surface self-skinned layer formed by foaming a thermoplastic polyester elastomer. In one embodiment, the thermoplastic polyester elastomer comprises a polystyrene elastomer. The skin layer of the present invention may further comprise a skin layer having a specific pattern, depressions or protrusions.

### Surface self-skinned layer formed by foaming a thermoplastic polyester elastomer

In one embodiment, the skin layer of the present invention comprises a surface self-skinned layer formed by foaming a thermoplastic polyester elastomer.

The thermoplastic polyester elastomer undergoes a foaming process under the action of a foaming agent, and upon completion of foaming, forms a three-layer structure as shown in Figure 3, comprising inner and outer self-skinned layers (the surface self-skinned layer and the lower self-skinned layer) and an intermediate foamed layer. The skin layer of the present invention comprises a surface self-skinned layer formed by the foaming and injection molding of the material, which is located on the outermost side of the multilayer material and is suitable for contact with the user. In one embodiment, the skin layer of the present invention comprises a surface self-skinned layer formed by the foaming and injection molding of TPEE.

### Thermoplastic Vulcanizate (TPV)

Thermoplastic vulcanizate (TPV), also known as thermoplastic dynamic vulcanizate, includes the term "dynamic" to more specifically describe the process used to produce this material-dynamic vulcanization. This process involves vulcanizing the rubber during the melting and blending of the rubber and thermoplastic resin. As the rubber vulcanizes, it continuously mixes with the thermoplastic resin; consequently, the vulcanized rubber is distributed as a dispersed phase within the continuous thermoplastic resin phase. Thermoplastic vulcanizate (TPV) exhibits high elasticity, high strength, environmental friendliness, safety, non-toxicity, high-temperature resistance, solvent resistance, impact resistance and a soft tactile feel.

Thermoplastic vulcanizate (TPV) elastomers consist of a blend of dynamically cured elastomers and thermoplastic resins, in which the elastomer is dispersed as fine elastomer particles within the thermoplastic resin phase. TPV advantageously exhibits many of the properties of thermoset elastomers while being processable like thermoplastic plastics. Elastomers commonly used to form TPV are ethylene, ethα -olefin and diene rubber copolymers, such as ethylene, propylene and diene monomer ("EPDM") rubber.

### Preparation Methods of the Invention

### First Method

The present invention provides a method of manufacturing a multilayer material (hereinafter also referred to as the "first method"), comprising:
providing a lightweight support structure material, a skin layer material, a soft layer material and a first film material;
softening the lightweight support structure material;
laminating the first film material with the soft layer material to obtain a soft layer with a film;
mold-forming the softened lightweight support structure material with the soft layer having the film to obtain a lightweight support structure with a soft layer;
injection molding the skin layer material onto the surface of the film material of the lightweight support structure with the soft layer to obtain the multilayer material. Softening the lightweight support structure material may be performed by any method conventionally used by those skilled in the art, including but not limited to softening the lightweight support structure material by heating.

In one embodiment, the first method of manufacturing the multilayer material of the present invention further comprises: prior to compression molding the softened lightweight support structure material and the soft layer with a film, pre-placing a plastic structural component in the lower mold of the hot press and heating it to melt the surface of the plastic structural component. The multilayer material of the present invention can be combined with different structural components to produce products for use in various applications.

In one embodiment, the lightweight support structure material comprises hemp fiberboard, foamed hemp fiberboard, foamed glass fiberboard, polypropylene, polyimide, polycarbonate or a combination thereof. In a preferred embodiment, the lightweight support structure material comprises hemp fiberboard. In one embodiment, the surface of the lightweight support structure has a second film. In one embodiment, the lightweight support structure and the second film exist in a composite form. In one embodiment, the surface of the lightweight support structure has a polyethylene (PE) film; upon heating, the polyethylene film melts and bonds with the lightweight support structure. In one embodiment, the polyethylene film on the surface of the lightweight support structure is located between the lightweight support structure and the soft layer. In one embodiment, the surface of the hemp fiberboard has a polyethylene film, which is located between the hemp fiberboard and the soft layer.

In one embodiment, the lightweight support structure material is softened by heating. In one embodiment, the heating temperature is approximately 200°C to 250°C. In a preferred embodiment, the heating temperature is approximately 220°C to 230°C. In a more preferred embodiment, the heating temperature is approximately 220°C.

In one embodiment, the lightweight support structure material is softened by heating. In one embodiment, the heating time is approximately 2 to 7 min. In a preferred embodiment, the lightweight support structure material is softened by heating for a duration of approximately 5 min.

In one embodiment, the soft layer material comprises a nonwoven fabric of polyethylene terephthalate (PET) fibers. In one embodiment, the surface of the soft layer has a first film. In one embodiment, the first film on the surface of the soft layer is located between the soft layer and the skin layer. The first film of the present invention must be compatible with the injection-molded material with which it comes into contact. In one embodiment, the first film comprises polypropylene, polyethylene, polyethylene terephthalate, thermoplastic polyurethane elastomer, thermoplastic polyester elastomer or a combination thereof. In a preferred embodiment, the first film comprises a thermoplastic polyurethane elastomer or a thermoplastic polyester elastomer or a combination thereof. In a more preferred embodiment, the first film comprises a thermoplastic polyurethane elastomer. In yet another more preferred embodiment, the first film comprises a thermoplastic polyester elastomer. In the present invention, the first film is located between the soft layer and the skin layer, and it prevents injection-molded material from penetrating into the soft layer, thereby preventing the soft layer from failing to provide the desired soft tactile feel due to changes in its properties caused by the penetration of the injection-molded material.

In one embodiment, the step of laminating the first film material with the soft layer material includes hot melt lamination or adhesive lamination. In one embodiment, the step of laminating the first film material with the soft layer material is hot melt lamination, which is accomplished by the following method: heating the first film material and the soft layer material to a temperature between approximately 5°C and 40°C above the melting point of the first film material. In one embodiment, the step of laminating the first film material with the soft layer material is thermal lamination, wherein the soft layer material comprises PET nonwoven fabric and the first film material comprises TPU, and the PET nonwoven fabric and TPU are heated to approximately 140°C.

In one embodiment, the step of laminating the first film material with the soft layer material is an adhesive lamination, which is accomplished by the following method: an adhesive film is interposed between the first film material and the soft layer material and heated to a temperature higher than the melting point of the adhesive film but lower than the melting point of the film material. In one embodiment, the adhesive film used in the adhesive film lamination of the first film material and the soft layer material comprises a polyethylene adhesive film, a polyamide adhesive film, a polyester adhesive film or a combination thereof. In one embodiment, the adhesive film is a polyamide adhesive film. In one embodiment, the step of laminating the first film material with the soft layer material is adhesive film lamination, wherein the soft layer material comprises PET nonwoven fabric, the film material comprises TPU, and the PET nonwoven fabric, TPU and adhesive film are heated to approximately 120°C.

In one embodiment, the injection-molded material for the skin layer comprises a thermoplastic polyester elastomer, a thermoplastic vulcanizate and a polyurethane. In a preferred embodiment, the injection-molded material for the skin layer comprises a thermoplastic polyester elastomer.

### Second Method

In another embodiment, the present invention provides a method of manufacturing a multilayer material (hereinafter also referred to as the "second method"), comprising:
providing a lightweight support structure material and a skin layer material, wherein the skin layer material contains a foaming agent;
softening the lightweight support structure material;
mold-forming the softened lightweight support structure material to obtain a lightweight support structure;
injection molding the skin layer material onto the surface of the lightweight support structure and foaming it to obtain the multilayer material.

In the present invention, softening the lightweight support structure material may be performed by any method conventionally used by those skilled in the art, including but not limited to softening the lightweight support structure material by heating.

In the present invention, a foaming agent is mixed with a skin layer material in a specific ratio to obtain a skin layer material containing the foaming agent. The blowing agent used in the present invention may be a blowing agent conventionally used by those skilled in the art, such as organic chemical blowing agents, including but not limited to alkanes (e.g., butane, pentane, hexane, octane, etc.), chlorinated hydrocarbons (e.g., dichloroethane),hydrochlorofluorocarbons (e.g., Freon), isocyanate compounds, azo compounds, hydrazine derivatives, urea-amine compounds, azide compounds, nitroso compounds, triazole compounds, etc. In one embodiment, the foaming agent comprises a foaming masterbatch for foaming microspheres. Conventionally used foaming agents also include inorganic chemical foaming agents, including but not limited to carbon dioxide, nitrogen, a combination of sodium bicarbonate and an acid, a combination of hydrogen peroxide and yeast, a combination of zinc and an acid, bicarbonates, carbonates and hydrides. In one embodiment, the foaming agent comprises a combination of sodium bicarbonate and an acid. In a specific embodiment, the foaming agent comprises a combination of sodium bicarbonate and sodium citrate. The foaming process used in the present invention may be conventional methods known to those skilled in the art, including but not limited to physical foaming, thermal decomposition of the foaming agent to generate gas or chemical foaming through the reaction of foaming agent components to generate gas. In one embodiment, the skin layer material containing the foaming agent comprises a skin layer material containing approximately 2 wt% to 5 wt% of the foaming agent. In one embodiment, the skin layer material containing a foaming agent comprises TPEE containing approximately 2 wt% to 5 wt% of a foaming agent. In one embodiment, the skin layer material containing a foaming agent comprises TPEE containing approximately 2 wt% to 5 wt% of a foaming masterbatch. In a preferred embodiment, the skin layer material containing a foaming agent comprises TPEE containing approximately 3 wt% of a foaming masterbatch.

In one embodiment, the lightweight support structure material comprises jute fiberboard, polypropylene, polyimide, polycarbonate or a combination thereof. In a preferred embodiment, the lightweight support structure material comprises jute fiberboard.

In one embodiment, the lightweight support structure material is softened by heating. In one embodiment, the heating temperature is approximately 200°C to 250°C. In a preferred embodiment, the heating temperature is approximately 220°C to 230°C. In a more preferred embodiment, the heating temperature is approximately 220°C.

In one embodiment, the lightweight support structure material is softened by heating. In one embodiment, the heating time is approximately 2 to 7 min. In a preferred embodiment, the heating time is approximately 5 min.

In one embodiment, the skin layer material containing a foaming agent comprises a thermoplastic polyester elastomer containing a foaming agent.

In one embodiment, the multilayer material may not include a first film located between the soft layer and the skin layer. In one embodiment, the multilayer material optionally includes a second film located between the lightweight support structure and the soft layer. In one embodiment, the second film comprises polypropylene, polyethylene, polyethylene terephthalate, thermoplastic polyurethane elastomer, thermoplastic polyester elastomer or a combination thereof. In one embodiment, the second film comprises polypropylene, polyethylene or a combination thereof. In a preferred embodiment, the second film comprises polyethylene. In one embodiment, the lightweight support structure and the second film are present in a composite form.

In one embodiment, the present invention provides a vehicle trim component comprising the multilayer material of the present invention and/or a multilayer material prepared by the first method and/or the second method provided by the present invention. In one embodiment, the present invention provides a vehicle trim component comprising the multilayer material of the present invention. In one embodiment, the present invention provides a vehicle trim component comprising a multilayer material prepared by the first method and/or the second method provided by the present invention. In one embodiment, the vehicle trim components comprising the multilayer material of the present invention and/or the multilayer material prepared by the first method and/or the second method provided by the present invention include: instrument panels, door panel inserts, seat back panels, steering wheel covers and armrest covers for the passenger side dashboard.

### Advantages

The multilayer material provided by the present invention can be used in vehicle trim components, such as instrument panels, door panel inserts, seat back panels, steering wheel covers and armrest covers for the passenger side dashboard, providing a soft touch feel that enhances the tactile experience and user comfort, while also offering lightweight and environmentally friendly characteristics.

Furthermore, the present invention provides a method of manufacturing the lightweight multilayer material. By employing a two-color compression molding and injection molding process, the soft layer can be compression-molded and the skin layer injection-molded onto a lightweight support structure. This eliminates the need for wrapping or foaming, avoids the use of adhesives, is more environmentally friendly, improves the manufacturing process, reduces energy consumption and thereby increases production capacity. The method of the present invention can utilize compression molding and foam injection molding processes to produce the lightweight, soft-textured multilayer material of the present invention. The process is simple to operate, cost-effective and conducive to industrial-scale production.

### Examples

The present invention will be described in further detail below with reference to specific examples.

It should be noted that the following examples are provided merely to clearly illustrate the technical solutions of the present invention and are not intended to limit the scope of the invention. For those skilled in the art, other variations or modifications may be made based on the above description. It is neither necessary nor possible to enumerate all possible embodiments here; however, any obvious variations or modifications derived therefrom remain within the scope of protection of the present invention. Unless otherwise specified, the instruments, equipment and reagents used in this document are commercially available.

### Example 1: The Multilayer Material of the Invention and Its Preparation

Using hemp fiberboard (purchased from Jiangyin Yanli Automotive Trim Co., Ltd.) as the lightweight support structure material, PET non-woven fabric as the soft layer and TPEE (purchased from Hefei Huitong New Materials Co., Ltd.) as the surface injection molding material, the multilayer material of the present invention is prepared through the following steps:
1. A PE film with a density of approximately 50 g/cm³ to 100 g/cm³ was placed on the surface of the hemp fiberboard. Through hot plate heating and flat plate pressing, a hemp fiberboard with a layer of PE film was obtained.
2. Place the jute fiberboard with the PE film layer on its surface in an oven and heat it at a temperature of approximately 220°C for about 5 min to soften the jute fiberboard, causing the PE film on its surface to melt and bond with the jute fiberboard.
3. Thermally bond the TPU film to the soft-layer PET nonwoven fabric at a temperature of approximately 140°C to produce a PET nonwoven fabric with a TPU film.
4. Place the plastic structural component in the lower mold of the hot press and heat it to melt the surface of the plastic structural component.
5. Place the softened hemp fiberboard in the lower mold of the hot-pressing mold and place the PET non-woven fabric with the TPU film on top of the softened hemp fiberboard, with the TPU film located on the side of the PET non-woven fabric facing away from the lightweight support structure. Then perform mold pressing to obtain a lightweight support structure with a soft layer.
6. Place the lightweight support structure with the soft layer into an injection molding die and inject TPEE onto the surface of the skeleton.

The structure of the multilayer material product 1 obtained by the above method is shown in Figure 1. In this figure, 100 denotes the outer layer formed by injection-molding TPEE; 200 denotes the soft layer formed by PET nonwoven fabric; and 300 denotes the lightweight support structure formed by hemp fiberboard.

### Example 2: The Multilayer Material of the Present Invention and Its Preparation

Using hemp fiberboard as the lightweight support structure material and TPEE containing a foaming agent as the skin injection molding material, the multilayer material of the present invention is prepared through the following steps:
1. Place the hemp fiber board in an oven and heat it at a temperature of approximately 220°C for about 5 min to soften the board.
2. Place the softened hemp fiberboard into an injection molding die and perform compression molding. Inject the material from the back and periphery to form the structure and seal the edges, thereby obtaining the lightweight support structure;
3. Place the lightweight support structure into an injection mold, keeping the mold slightly open, and inject TPEE containing approximately 3% by weight of foaming masterbatch onto the surface of the skeleton.

Here, keeping the mold slightly open during the injection of TPEE containing a foaming agent onto the skeleton's surface is to allow sufficient space for the TPEE to foam.

The structure of the multilayer material product 2 obtained by the above method is shown in Figures 2 and 3. In Figure 2, 10 denotes the foamed injection-molded skin, which is a three-layer structural layer formed by the foamed injection molding of the foaming agent-containing TPEE skin layer material; 301 denotes the lightweight support structure formed from the lightweight support structure material, hemp fiberboard. In Figure 3, 101 is the surface self-skinned layer formed by the foamed injection molding process, which serves as the injection-molded skin; 201 is the intermediate foamed layer formed by the foamed injection molding process, which serves as the soft layer; and 103 is the lower self-skinned layer formed by the foamed injection molding process, which is bonded to the lightweight support structure.

### Example 3: Hardness Test

Following the preparation method of Example 1, the soft layer was replaced from PET non-woven fabric to sponge (purchased from Shanghai Jinzhida Composite Materials Co., Ltd.), resulting in the multilayer material product 3 of the present invention.

Control products were prepared using the compression hybrid molding (CHyM) process, skin injection molding or two-color injection molding. The specific preparation steps are as follows:
1. A fiberboard (purchased from Jiangyin Yanli Automotive Trim Co., Ltd.) was processed via a compression molding method to form a compression-molded part;
2. Form a skin layer on the surface of the compression-molded part by injection molding TPEE material (purchased from Hefei Huitong New Materials Co., Ltd.) to obtain the control product.

The hardness of the above products was determined and characterized using the Shore method in accordance with the standardized test procedures ISO 7619-1:2004 or ASTM D2240. The results are shown in the table below:

| Item | Product 1 of the Invention | Product 2 of the Invention | Product 3 of the Invention | Control Product |
|---|---|---|---|---|
| Shore C Hardness | 50 to 60 | 40 to 60 | 30 to 50 | ≥60 |

As can be seen from the results in the table above, the Shore C hardness of the products of the present invention is all below 60 degrees. Compared to the control products, the products of the present invention have a lower Shore C hardness, and thus offer a softer feel, providing users with a significantly improved tactile sensation and a better user experience.

Those skilled in the art will appreciate that many modifications and variations of the present invention may be made without departing from its spirit and scope. The specific examples described herein are provided merely by way of example and are not intended to be limiting in any way. The true scope and spirit of the present invention are defined by the appended claims, and the description and examples are merely illustrative.

## Claims

1. A multilayer material for vehicle trim components, comprising:
- a lightweight support structure;
- a skin layer; and
- a soft layer arranged between the lightweight support structure and the skin layer; wherein,
i) the skin layer is formed by injection molding, and a first film is arranged between the soft layer and the skin layer; or
ii) the skin layer is formed by foam injection molding.

2. The multilayer material according to claim 1,
further comprising a second film arranged between the lightweight support structure and the soft layer.

3. The multilayer material according to claim 1, wherein
- the lightweight support structure comprises natural fiber board, foamed natural fiber board, foamed glass fiber board, polypropylene, polyimide, polycarbonate, or a combination thereof, preferably the lightweight support structure comprises a hemp fiber board; and/or
- the soft layer comprises a polyethylene terephthalate fiber nonwoven fabric, a three-dimensional mesh fabric, a sponge, a thermoplastic polyester elastomer, an intermediate foamed layer formed by foaming of a thermoplastic polyester elastomer, or a combination thereof; and/or
- the skin layer comprises a thermoplastic polyester elastomer or a surface self-skinned layer formed by foaming thereof, a thermoplastic vulcanizate, polyurethane, or a combination thereof, preferably the skin layer comprises a thermoplastic polyester elastomer or a surface self-skinned layer formed by foaming thereof.

4. The multilayer material according to any one of claims 1 to 3, wherein
the lightweight support structure has a thickness of 1.5 mm to 3 mm, a flexural modulus of 1800 MPa or more, and a density of 0.85 g/cm³ or less;
the soft layer has a thickness of 0.5 mm to 3 mm and a Shore C hardness of 30 to 60;
the skin layer has a thickness of 0.4 mm to 1.2 mm, a Shore A hardness of 40 to 80, and a density of 1 g/cm³ to 1.3 g/cm³

5. The multilayer material according to claim 2, wherein:
the first film and the second film independently comprise polypropylene, polyethylene, polyethylene terephthalate, thermoplastic polyurethane, thermoplastic polyester elastomer, or a combination thereof;
wherein preferably the first film comprises thermoplastic polyurethane elastomer or thermoplastic polyester elastomer, or a combination thereof;
the second film comprises polypropylene or polyethylene, or a combination thereof.

6. The multilayer material according to claim 1 or 2, wherein the soft layer and the first film are provided in a composite form.

7. The multilayer material according to claim 2, wherein the lightweight support structure and the second film are provided in a composite form.

8. A method of manufacturing the multilayer material according to any one of claims 1 to 7, comprising:
providing a lightweight support structure material, a skin layer material, a soft layer material, and a first film material;
softening the lightweight support structure material;
laminating the first film material with the soft layer material to obtain a soft layer having a film;
compression molding the softened lightweight support structure material with the soft layer having the film to obtain a lightweight support structure with a soft layer;
injection molding the skin layer material on a surface of the film of the lightweight support structure having the soft layer to obtain the multilayer material.

9. The method according to claim 8,
wherein laminating the first film material with the soft layer material comprises:
heating the first film material and the soft layer material to a temperature 5 °C to 40 °C higher than a melting point of the first film material; or
providing an adhesive film between the first film material and the soft layer material and heating to a temperature higher than a melting point of the adhesive film and lower than a melting point of the first film material.

10. The method according to claim 9,
wherein the first film comprises thermoplastic polyurethane elastomer or thermoplastic polyester elastomer;
the adhesive film comprises a polyethylene adhesive film, a polyamide adhesive film, a polyester adhesive film, or a polyamide adhesive film.

11. A method of manufacturing the multilayer material according to any one of claims 1 to 7, comprising:
providing a lightweight support structure material and a skin layer material, wherein the skin layer material comprises a foaming agent;
softening the lightweight support structure material;
compression molding the softened lightweight support structure material to obtain a lightweight support structure;
injection molding the skin layer material on a surface of the lightweight support structure and foaming to obtain the multilayer material.

12. The method according to any one of claims 8 to 11, wherein
the lightweight support structure material comprises a natural fiber board, a foamed natural fiber board, a foamed glass fiber board, polypropylene, polyimide, polycarbonate, or a combination thereof, preferably the lightweight support structure material comprises a hemp fiber board;
and/or
the soft layer material comprises polyethylene terephthalate or a thermoplastic polyester elastomer; and/or
the skin layer material comprises a thermoplastic polyester elastomer, a thermoplastic vulcanizate, polyurethane, or a thermoplastic polyester elastomer.

13. The method according to claim 12, wherein the lightweight support structure material comprises a hemp fiber board;
the skin layer material comprises a thermoplastic polyester elastomer.

14. The method according to any one of claims 8 to 11,
wherein softening the lightweight support structure material is performed by heating,
wherein a heating temperature is 200 °C to 250 °C, preferably 220 °C; and/or
a heating time is 2 to 7 minutes, preferably 5 minutes.

15. A vehicle trim component, comprising the multilayer material according to any one of claims 1 to 7, preferably the vehicle trim component comprises an instrument panel, a door panel insert, a seat back panel, a steering wheel cover, or a center console armrest cover.

16. A vehicle comprising the vehicle trim component according to claim 15, preferably the vehicle comprises an automobile, an aircraft, a ship, a bicycle, a tram, a train, a subway, or a light rail vehicle.
